Europäisches Patentamt

**European Patent Office**

**Office européen des brevets**

(19)

(11) Numéro de publication: **0 038 242**
**B1**

(12)

# FASCICULE DE BREVET EUROPEEN

(45) Date de publication du fascicule du brevet:
**15.02.84**

(51) Int. Cl.³: **B 23 K 11/04,** B 23 K 11/32

(21) Numéro de dépôt: **81400507.0**

(22) Date de dépôt: **30.03.81**

(54) **Perfectionnements aux machines à souder les rails ou produits analogues.**

(30) Priorité: **11.04.80 FR 8008163**

(43) Date de publication de la demande:
**21.10.81 Bulletin 81/42**

(45) Mention de la délivrance du brevet:
**15.02.84 Bulletin 84/7**

(84) Etats contractants désignés:
**AT CH DE GB IT LI SE**

(56) Documents cités:
**AT - B - 352 503**
**GB - A - 1 235 164**

(73) Titulaire: **MATIX INDUSTRIES (Société Anonyme),
59, rue Saint-Lazare, F-75009 Paris (FR)**

(72) Inventeur: **Mutti, Marcello, 25/33, rue Chauveau,
F-92000 Neuilly (FR)**

(74) Mandataire: **Micheli, Michel Pierre et al, MICHELI &
CIE 118, Rue du Rhône Case Postale 47,
CH-1211 Geneve 6 (CH)**

ACTORUM AG

## Perfectionnements aux machines à souder les rails ou produits analogues

La présente invention se rapporte aux machines à souder électriquement les rails, du type décrit au brevet URSS No 129758. Comme autres brevets relatifs à cette technique, on peut citer les brevets USA Nos 671084, 1433600, 2212393, 2761952, les brevets allemands Nos 750756, 914765, les brevets français Nos 749361, 1338095, 1382435, 1384943, 1390443 et le brevet suisse No 249172.

Comme on peut le voir par cet état de l'art, ces machines s'appliquent non seulement au soudage des rails mais d'une manière générale au soudage bout à bout de tous profilés et, dans la présente description, l'expression soudage de rails doit être comprise comme se rapportant au soudage de tous profilés.

Lorsqu'on soude les rails de chemin de fer à l'aide de machines à souder par étincelage de ce type, il est nécessaire de procéder à l'élimination du bourrelet de métal résultant du forgeage, et cela sur toute la périphérie du rail, afin de ne pas avoir à modifier l'espacement des traverses ni créer d'hétérogénéité dans la géométrie du rail.

Il convient de faire ce travail à chaud pour des raisons d'économie et de sécurité métallurgique.

Une solution a été présentée par l'Institut Paton de Kiev (URSS) (demande de brevet français No 75.15829 du 21 mai 1975, numéro de publication 2273117) consistant en quatre couteaux épousant la forme du profil du rail.

Un couteau latéral et un demi-couteau supérieur, correspondant à la moitié du profil du rail selon son plan de symétrie, sont reliés à chacune des demi-pinces de serrage de l'un des corps de la machine. La fermeture de la pince de serrage provoque celle des couteaux d'ébavurage qui lui sont solidaires, l'application des couteaux latéraux sur le profil du rail se fait à l'aide d'une biellette reliant ces deux couteaux à leur partie supérieure. En fin de soudage, les demi-pinces portant à la fois les mors conducteurs et les couteaux sont légèrement desserrées et rapprochées des demi-pinces opposées restées fixées sur le rail, ce qui arase le bourrelet de soudure.

Le système présente un inconvénient majeur, car les couteaux qui sont déjà disposés en léger retrait par rapport aux mors conducteurs formant électrodes, et donc par rapport au rail, s'écartent encore davantage du profil, principalement à leur partie inférieure, lorsqu'on desserre les mors conducteurs, ce qui a pour conséquence une imprécision dans l'ébavurage.

Un autre inconvénient majeur réside dans le fait qu'il est nécessaire de relâcher l'un des deux rails adjacents à la soudure très peu de temps après la fin du cycle de soudage, au moment où le métal est encore plastique. De ce fait, les contraintes qui ont été transmises aux rails lors du serrage, en raison des défauts géométriques inévitables desdits rails, sont appliquées à la soudure, ce qui provoque des déformations du joint et des risques de cisaillement du métal en cours de solidification.

Le document AT-B No 352503 qui a servi à délimiter la revendication 1 comporte, entre les éléments usuels, un dispositif de rattrapage de jeu pour commander l'articulation des couteaux d'ébavurage qui sont articulés sur des axes montés dans les demi-pinces de la pince de serrage déplaçable.

La présente invention a pour but de remédier à ces inconvénients.

Elle vise une machine à souder des rails par étincelage du type comportant deux pinces de serrage à mors conducteurs articulées sur le même arbre, au moins une pince étant susceptible de coulissement le long dudit arbre par rapport à l'autre pince sous l'action d'au moins un vérin, avec guidage le long de tiges latérales au rail qui peuvent être des tiges de vérin, et comprenant des couteaux d'ébavurage montés à articulation, caractérisée en ce que lesdits couteaux d'ébavurage sont montés sur une pince d'ébavurage indépendante de la pince de serrage, dont les demi-pinces sont articulées et coulissantes sur le même arbre et sur les mêmes tiges que la pince de serrage, et susceptibles de coulissement longitudinal indépendant de celui des pinces de serrage, sous l'action de vérins séparés.

De préférence:

a) Chaque demi-pince porte-couteaux a la forme d'un cadre en U, entourant la demi-pince de serrage correspondante, et coulissant par l'extrémité de ses branches sur l'arbre d'articulation commun.

b) Le couteau porté par une demi-pince est formé d'au moins une partie solidaire de ladite demi-pince reproduisant le profil d'une moitié de la section droite du rail selon son axe de symétrie, à l'exception de la partie inférieure du patin, et d'au moins une partie mobile venant s'appliquer sous la partie inférieure du patin et montée de façon à pouvoir s'écarter pour permettre l'ouverture de la pince.

La partie mobile est de préférence montée sur biellettes et repoussée par vérin contre le dessous du patin du rail au moment du serrage.

Ainsi, l'ébavurage peut être réalisé sans les inconvénients du desserrage des pinces de soudure et avec une précision accrue.

L'invention est illustrée par le dessin annexé sur lequel:

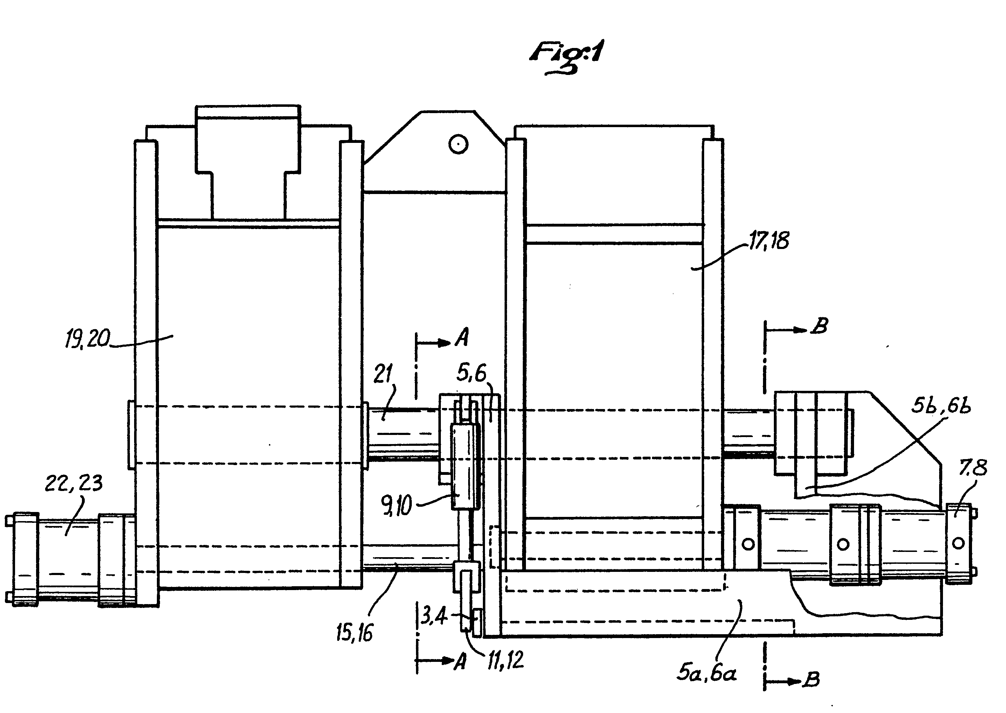

la fig. 1 est une vue latérale simplifiée de l'ensemble de la machine;

la fig. 2 est une vue schématique selon A-A de la fig. 1, les pinces en position d'ouverture;

la fig. 3 est une vue partielle selon A-A de la fig. 1, en cours de serrage des pinces;

la fig. 4 est une vue analogue à la fig. 3, la pince d'ébavurage étant serrée, et

la fig. 5 est une vue schématique selon B-B de la fig. 1.

En se reportant à ces figures, on peut voir que la machine est du type comportant deux pinces de serrage à mors conducteurs portant les références 17, 18 d'une part, 19, 20 d'autre part.

Ces pinces sont articulées sur l'arbre commun 21. Elles coulissent sur l'arbre 21 et sur les tiges 15 et 16, qui sont les tiges des vérins 22, 23 assurant le déplacement relatif des pinces 17, 18 et 19, 20 après serrage, en vue d'effectuer le rapprochement des extrémités de rails et leur soudure.

Une machine de ce type est décrite plus en détail dans le brevet URSS No 129758.

La machine est munie de couteaux d'ébavurage 1 et 2 montés sur une pince d'ébavurage formée des demi-pinces 5 et 6; cette pince d'ébavurage est indépendante des pinces de serrage 17, 18 et 19, 20; son articulation est constituée par l'arbre 21 d'articulation des pinces de serrage. Les demi-pinces 5 et 6 coulissent par ailleurs sur les tiges 15 et 16 ainsi que sur l'arbre 21.

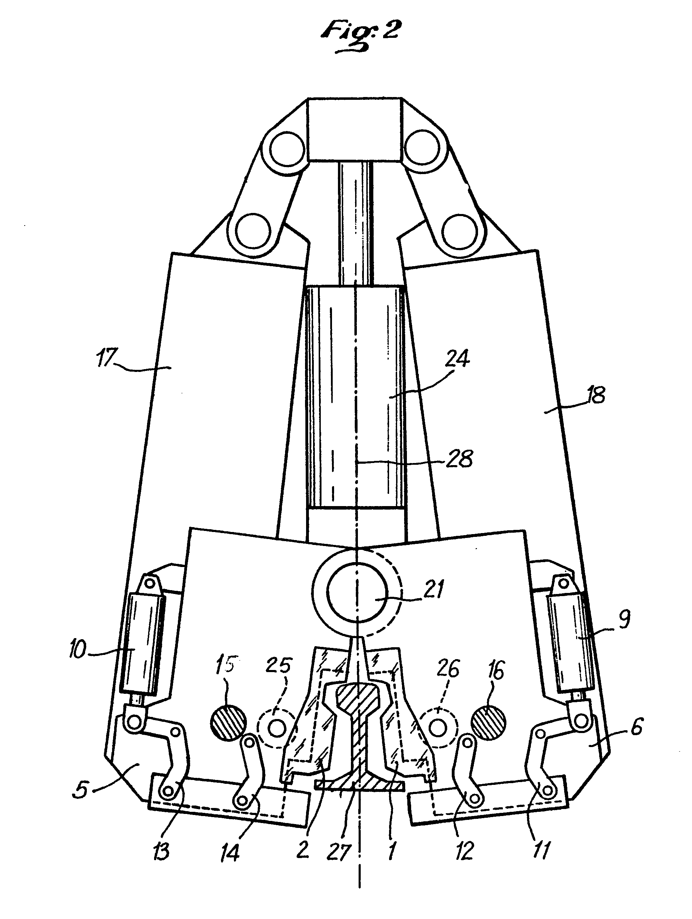

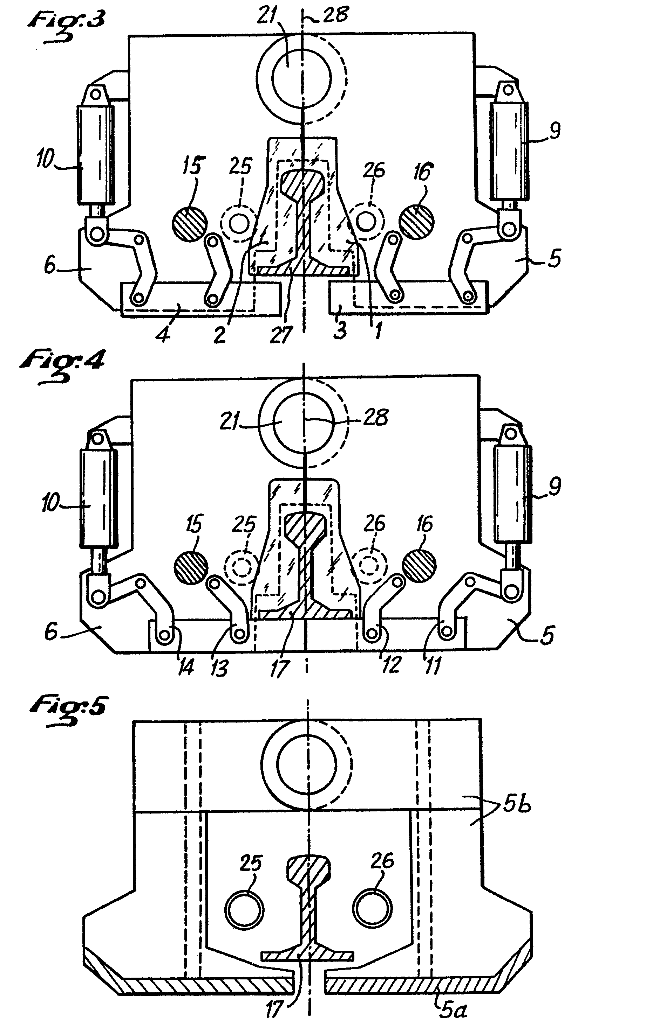

Ainsi, la pince d'ébavurage se trouve serrée par la même opération et par les mêmes vérins 24 que les pinces de serrage, mais elle peut coulisser sur l'arbre 21 et les tiges 15, 16 indépendamment de ces dernières, sous l'action de vérins séparés 7, 8 agissant par les tiges 25, 26 dont on voit en pointillé les points d'impact sur les fig. 2, 3 et 4.

Il en résulte que les pinces de serrage et de soudure 17, 18 et 19, 20 peuvent rester serrées pendant l'opération d'ébavurage, ce qui élimine les inconvénients majeurs cités plus haut.

Les demi-pinces 5 et 6 font de préférence partie d'un châssis 5a, 6a, 5b, 6b qui a la forme d'un cadre en U entourant la pince de serrage 17, 18 et coulissant par l'extrémité de ses branches sur l'arbre 21; de cette manière, tous les efforts de l'action d'ébavurage sont pratiquement reportés sur l'arbre principal 21 sans risque de déformation ou de détérioration des tiges 15, 16 qui servent principalement au guidage et au serrage.

Les couteaux 1 et 2 comportent des parties mobiles ou ouvrantes 3 et 4 qui viennent coiffer la face inférieure des patins des rails 27, tandis que les parties 1 et 2 sont fixées sur les demi-pinces 5 et 6, ces parties 1 et 2 reproduisant chacune le profil d'une moitié de section droite du rail selon son axe de symétrie vertical 28, à l'exception de ladite face inférieure des patins des rails.

Les couteaux 3 et 4 sont montés sur les demi-pinces 5 et 6 par l'intermédiaire des biellettes 11, 12, 13, 14.

Les fig. 2, 3 et 4 illustrent l'opération: en position d'ouverture de la pince, les couteaux 3 et 4 sont éclipsés par le jeu des biellettes sous l'action des vérins 9, 10 (fig. 2). A la fermeture, les couteaux 1 et 2 sont refermés et les biellettes rapprochent les couteaux 3 et 4 du patin du rail. Au serrage, les couteaux 1 et 2 épousent la forme du rail ainsi que les couteaux 3 et 4 repoussés par les vérins 9, 10.

En fin de cycle de soudage, les outils 1 à 4 étant appliqués sur le rail, les vérins d'ébavurage 7, 8 sont actionnés, provoquant le déplacement des pinces 5 et 6 et, par conséquent, l'arasement du bourrelet de soudure, cela sans relâchement de la pression de serrage. L'ébavurage effectué, les couteaux inférieurs retournent en position repos et la machine peut être desserrée du rail et dégagée. Si nécessaire, les rails peuvent être maintenus après ébavurage aussi longtemps que souhaité pour assurer la consolidation du joint ou pour apporter un postchauffage à la soudure si les caractéristiques de l'acier le requièrent.

## Revendications

1. Machine à souder des rails par étincelage du type comportant deux pinces de serrage à mors conducteurs (17, 18 et 19, 20) articulées sur le même arbre (21), au moins une pince étant susceptible de coulissement le long dudit arbre par rapport à l'autre pince sous l'action d'au moins un vérin (22), avec guidage le long des tiges (15, 16) latérales au rail qui peuvent être des tiges de vérin, et comprenant des couteaux d'ébavurage (1, 2) montés à articulation, caractérisée en ce que lesdits couteaux d'ébavurage (1, 2) sont montés sur une pince d'ébavurage (5, 6) indépendante de la pince de serrage, dont les demi-pinces (5 et 6) sont articulées et coulissantes sur le même arbre (21) et sur les mêmes tiges (15, 16) que la pince de serrage et susceptibles de coulissement longitudinal indépendant de celui des pinces de serrage, sous l'action de vérins séparés (7, 8).

2. Machine selon la revendication 1, caractérisée en ce que chaque demi-pince porte-couteaux (5, 6) a la forme d'un cadre en U, entourant la demi-pince de serrage (17, 18) correspondante, et coulissant par l'extrémité de ses branches sur l'arbre d'articulation (21) commun.

3. Machine selon l'une quelconque des revendications précédentes, caractérisée en ce que le couteau porté par une demi-pince indépendante d'ébavurage (5, 6) est formé d'au moins une partie (1, 2) solidaire de ladite demi-pince reproduisant le profil d'une moitié de la section droite du rail selon son axe de symétrie, à l'exception de la partie inférieure du patin, et d'au moins une partie (3, 4), mobile par rapport aux demi-pinces d'ébavurage (5, 6), venant s'appliquer sous la partie inférieure du patin et montée de façon à pouvoir s'écarter verticalement et/ou latéralement pour permettre l'ouverture de la pince.

4. Machine selon l'une quelconque des revendications précédentes, caractérisée en ce que la partie (3, 4) mobile est de préférence montée par l'intermédiaire de biellettes (11, 12, 13, 14) sur les pinces (5, 6) indépendantes d'ébavurage et repoussée par des vérins (9, 10) montés sur lesdites pinces (5, 6) contre le dessous du patin du rail au moment du serrage.

## Patentansprüche

1. Maschine zum Schweissen von Schienen durch Abschmelzschweissung des Typs, der zwei Spannzangen mit Backenführungen (17, 18; 19, 20) umfasst, die auf der gleichen Welle (21) angelenkt sind, wobei wenigstens eine der Spannzangen unter der Wirkung eines Hydraulikzylinders (22) entlang der Welle in bezug auf die andere·

Spannzange gleiten kann, wobei sie entlang seitlich der Schiene angeordneten Stangen (15, 16) geführt ist, die Zylinderstangen sein können, und mit angelenkten Abgratmessern (1, 2) versehen ist, dadurch gekennzeichnet, dass die Abgratmesser (1, 2) auf einer Abgratzange (5, 6) angeordnet sind, die unabhängig von der Spannzange ist und deren Zangenhälften (5, 6) gleitend auf der gleichen Welle (21) und auf den gleichen Stangen (15, 16) angelenkt sind wie die Spannzange und unter der Wirkung von getrennten Zylindern (7, 8) unabhängig vom Gleiten der Spannzangen in Längsrichtung gleiten können.

2. Maschine nach Anspruch 1, dadurch gekennzeichnet, dass jede Hälfte der Abgratzange (5, 6) die Form eines U-förmigen Rahmens aufweist, der die entsprechende Hälfte der Spannzange (17, 18) umgibt und mit den Enden seiner Schenkel auf der gemeinsamen Gelenkwelle (21) gleitet.

3. Maschine nach einem der vorhergehenden Ansprüche, dadurch gekennzeichnet, dass das von einer der unabhängigen Hälften der Abgratzange (5, 6) getragene Abgratmesser aus wenigstens einem Teil (1, 2) besteht, der fest bzw. formschlüssig mit der Zangenhälfte verbunden ist, die das Profil einer Hälfte des Querschnittes der Schiene entlang ihrer Symmetrieachse mit Ausnahme des unteren Abschnittes des Schienenfusses besitzt und wenigstens einen Teil (3, 4) aufweist, der in bezug auf die Hälften der Abgratzange (5, 6) bewegbar ist, unter dem unteren Abschnitt des Schienenfusses anliegt und zum Öffnen der Zange vertikal und/oder seitlich verschiebbar ist.

4. Maschine nach einem der vorhergehenden Ansprüche, dadurch gekennzeichnet, dass der bewegbare Teil (3, 4) vorzugsweise unter Zwischenschaltung von Hebeln (11, 12, 13, 14) auf den unabhängigen Zangen (5, 6) montiert ist und von Zylindern (9, 10), die auf den Zangen (5, 6) befestigt sind, im Augenblick des Einspannens gegen den unteren Abschnitt des Schienenfusses drück- bzw. schiebbar ist.

**Claims**

1. Spark welding machine for rails of the type comprising two gripping pliers with conducting jaws (17, 18; 19, 20) hinged on the same shaft (21), at least one plier being able to slide along said shaft with respect to the other plier under the action of a jack (22), being guided along rods (15, 16) laterally from the rail which may be jack rods, and comprising burring knives (1, 2) mounted on hinges, characterized by the fact that the said burring knives (1, 2) are mounted on a burring plier (5, 6) independent from the gripping plier, the half pliers of which (5, 6) are hinged and sliding on the same shaft (21) and on the same rods (15, 16) than the gripping plier and able to slide longitudinally independently of the gripping pliers, under the action of different jack (7, 8).

2. Machine according to claim 1, characterized by the fact that each half knife carrying plier (5, 6) has the shape of a U frame, surrounding the corresponding half gripping plier (17, 18), and sliding by means of the end of its arms and the common hinging shaft (21).

3. Machine according to any one of the preceding claims, characterized by the fact that the knife carried by an independent half burring plier (5, 6) is made of at least one part (1, 2) fast with the said half plier reproducing the profile of half the cross-section of the rail according to its symmetry axis with the exception of the lower part of the foot and of at least one part movable with respect to the half burring pliers (5, 6) applied under the lower part of the foot and mounted in a manner as to be vertically and/or laterally spaceable to enable the opening of the plier.

4. Machine according to any one of the preceding claims, characterized by the fact that the movable part (3, 4) is preferably mounted through levers (11, 12, 13, 14) on the independent burring pliers (5, 6) and pushed by means of jacks (9, 10) carried by said pliers (5, 6) against the underneath of the foot of the rail during the gripping.

*Fig:1*

# Fig. 2

Fig.3

Fig.4

Fig.5